# EUROPEAN PATENT SPECIFICATION

(11) **EP 2 211 542 B1**
(45) Date of publication and mention of the grant of the patent: **12.08.2020**
(21) Application number: 09151272.3
(22) Date of filing: 23.01.2009
(51) Int. Cl.: H04N 5/765, H04N 7/173, H04N 5/445

(54) **Making available previously broadcast programming**
Verfügbarmachung eines davor erstellten Rundfunkprogramms
Rendre disponible une programmation de diffusion précédente

(43) Date of publication of application: 28.07.2010
(73) Proprietor: DISH Technologies L.L.C., Englewood, CO 80112 (US)
(72) Inventor: Stephenson, Alastair, Steeton, Keighley BD20 6QW (GB)
(74) Representative: Beck Greener LLP

(56) References cited:
- US-A1- 2003 237 097
- US-A1- 2007 192 793

## Description

The present invention relates to a method and network for making available programming which was previously broadcast.

Receiving devices for receiving broadcast audio/visual programming are frequently able to display an electronic program guide to enable the user to choose current or future programming either for presentation or to be recorded and stored. Such a receiving device may include a set top box with a hard disk for storage. The set top box may have prompt programs which invite the user to record an upcoming program, for example, because the same or similar program was previously recorded. However, users will still find that they have missed an earlier broadcast program which they wanted to view and which they have not arranged to record.

US2003/237097A1 describes a Personal Video Recorder which presents an Electronic Program Guide allowing the user to select available past programming as well as current and future broadcast programming for downloading/recording to their PVR device for later viewing. Past programming is obtained from peer devices which may have recorded the programming, or from a content distributor who may make programming available for download on the network.

US2007/192793A1 describes an Electronic Program Guide that allows past programming to be obtained for presentation via Video on Demand links, as well as current and future programming to be obtained via a broadcast.

The present invention seeks to provide a user with access to broadcast programming even though it was available in the past.

According to a first aspect of the present invention there is provided a method of utilising an electronic program guide to make available at a local receiver programming which was previously broadcast, the method comprising:
receiving at a server details of earlier programs, which have already been broadcast, and which have been stored by receiving devices party to a network, and forming a list of stored earlier programs together with details of the receiving devices where they are stored,
causing details of the identified earlier stored programs to be incorporated into an electronic program guide of the local receiver which is party to the network such that the earlier, stored programs are available for presentation, wherein the electronic program guide also identifies the broadcast channels available and current and future programs available for selection, and
in response to the selection, by way of a user interface of the local receiver, of an earlier, stored program, the server coupling the local receiver to one or more receiving devices where the required program is stored and causing that selected earlier stored program to be accessed via a peer-to-peer connection for presentation by the local receiver, characterised by:
   prior to coupling the local receiver and the one or more receiving devices, the server obtaining details of subscription terms and conditions appertaining to local receiver and the server making a selected, stored, program available to the local receiver by only where the subscription terms appertaining to the local receiver allow such availability..

Currently, the electronic program guide is either compiled or finalised at the set top box utilising information from the content provider and/or head-end. The programming information which is available in an electronic program guide is current or in the future. Details of earlier broadcast programs, which are no longer available, are removed from the electronic program guide.

The present invention proposes that earlier available programs should be recorded or otherwise stored and their availability then made evident to a user by being presented in the electronic program guide. Thus, the electronic program guide would look much the same as those currently available except that the user would be able to scroll backwards through content in the past. Where the earlier content had been stored, it would then be accessible by way of the electronic program guide in the usual manner.

In known manner, a user is enabled to highlight a program for presentation. If the highlighted program is then selected, it is caused to be displayed either in conjunction with the electronic program guide or in its place.

In one embodiment, the local receiver of broadcast programming comprises a receiving device having means arranged to receive and present broadcast programming, processing means arranged to present the electronic program guide, at least one user interface, and means for storing one or more programs. In a particularly common implementation, the receiver may comprise a TV receiver with a screen, a set top box arranged to receive the programming and coupled to the TV receiver, and a user interface in the form of a remote control.

It will be appreciated that when there are many users, one or more of them may have occasion to record a program of interest to other users. With the invention it is proposed that these already recorded programs be made available to other users. It is thus proposed that the receiving devices of a number of users should be networked. The fact that these programs have been recorded and, thus, are available is signalled by the provision of an electronic program guide at each networked receiving device which indicates the availability of programming which was broadcast earlier than the present time.

In one embodiment, the method further comprises causing the selected, earlier, stored program to be downloaded to said one receiving device for local storage and subsequent presentation.

Thus, having identified the availability of an earlier program of interest, a user can arrange for it to be downloaded to his local receiving device. For example, it may be recorded to the disk of the user's set top box. The user may then access the program, as he would any other recorded programming, at his convenience and present the program for listening or viewing.

Additionally and/or alternatively, the method may comprise enabling streaming delivery of the selected, earlier, stored program to said one receiving device for contemporaneous presentation by said one receiving device.

In this case, once the program has been located, it is simply streamed for contemporaneous viewing to the user who has asked for it by way of the electronic program guide.

The method comprises forming at a server of the network a list of earlier stored programs, and causing the formed list to be incorporated into the electronic program guides to be presented by each receiving device of the network.

When a user wishes to access a stored program, it is highlighted and selected by use of the electronic program guide. The server then couples the user's receiving device to the receiving device where the required program is stored.

In an embodiment, the server of the network is caused to periodically interrogate the receiving devices of the network to identify which earlier programs have been stored and then to update the formed list. Preferably, it is a server which identifies the available stored content and provides individual receiving devices with the necessary information to enable the electronic program guide presented by those receiving devices to reveal the existence of content from the past.

If required, individual servers could be networked in their turn to increase the coverage of the network. This increases the chance that any particular user of the network will be able to access required content that has been recorded.

The content which is accessed and stored by receiving devices of the network may be content which should only be made available to subscribers. For example, the content may be individual programs available on a pay-per-view basis or may be a channel available only by subscription such that no programs broadcast should be freely available. To deal with this situation, control of the content is by the one or more servers provided in the network.

Thus, the method comprises enabling the server to obtain details of subscription terms and conditions appertaining to each receiving device, and enabling the server to make a selected, stored, program available to said one receiving device only where the subscription terms appertaining to said one receiving device allow such availability.

The present invention also extends to a network for making available programming which was previously broadcast, the network comprising:
a plurality of receiving devices coupled to form a network,
each receiving device being a receiver of broadcast programming comprising means arranged to receive broadcast programming from a content provider and present the broadcast programming, processor means arranged to present an electronic program guide to identify the time of presentation and the channel or source of various programs, at least one user interface, and means for storing one or more programs received by said receiving and presenting means,
wherein the receiver is additionally arranged to communicate with a server via a network and to receive information about earlier programs which have been stored by the network, and in that the processor means is arranged to present an electronic program guide identifying the broadcast channels available and current and future programs available, as well as incorporating details of various programs which were broadcast at a time earlier than the present time and to identify any such earlier programs that had been stored locally by the receiver, or by the network, and are available,
at least one server coupled to the network such that it is arranged to communicate with the plurality of the receiving devices in the network,
the server being arranged to identify earlier programs, which have already been broadcast, and which have also been stored by at least one receiving device of the network, and to cause details of the identified earlier stored programs to be incorporated into the electronic program guide of each receiving device,
wherein in response to a selection, by way of the user interface of the local receiver, of an earlier, stored program, the server is arranged to couple the local receiver to one or more receiving devices where the required program is stored and cause that selected earlier stored program to be accessed via a peer-to-peer connection for presentation by the local receiver, characterised in that:
   the server is arranged to, prior to coupling the local receiver and the one or more receiving devices, obtain details of subscription terms and conditions appertaining to local receiver, and the server making a selected, stored, program available to the local receiver by only where the subscription terms appertaining to the local receiver allow such availability.

Preferably, the receiving devices coupled by the network communicate with the server, and with each other, using internet protocol (IP).

In an embodiment, the receiver is arranged to communicate to the network details of broadcast programs stored by said storing means.

Each receiver is arranged to give details of any broadcast programs it has stored to the server of the network. This enables the server to develop a list of earlier programs which have been stored for provision to all of the receivers and for presentation in the electronic program guides.

It will be appreciated that it will generally be impractical to make content available which has been stored for a substantial period of time. In practice the earlier stored content might be that available during the preceding 24 hours.

In an embodiment, the receiver is arranged upon request to make stored programs available to other receiving devices of the network, the processor means being arranged to reencrypt any stored programs which were decrypted on receipt before making the programs available.

As earlier explained, where content is not free to air, the controls and terms imposed by the content providers have to be respected. Thus, if a receiver, which is entitled to receive content from a subscription channel, for example, receives and records a program it will decrypt the content and store it in decrypted form. The receiving device may therefore reencrypt the content before making it available to another receiver on the network.

Software can be provided at the server to enable the necessary communications of the network to take place and to control the gathering of information from individual receivers and to facilitate the provision of electronic program guides with the backwards capability at each receiver.

Preferred embodiments of the present invention will hereinafter be described, by way of example, with reference to the accompanying drawings in which:
Figure 1 shows schematically the provision of programming by way of a set top box to a display on a television set,
Figure 2 shows an example of an electronic program guide of the invention as presented on the display of a television set, and
Figure 3 illustrates a network of receiving devices of the present invention.

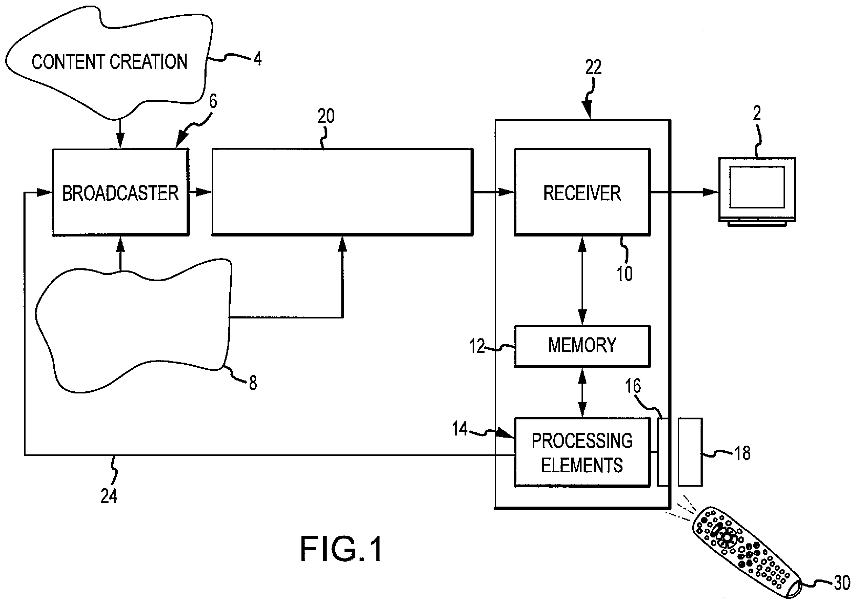

In this specification we refer to a receiver for broadcast programming. This is shown in Figure 1, for example, as a set top box 22 in conjunction with a television receiver 2 having a display. However, it will be understood that the set top box comprehends any digital device able to impart functionality to a television receiver whether provided in a stand-alone box, incorporated in a stand-alone box along with other devices, or integrated within the television receiver. In addition, the receiver will have presentation means, usually comprising speakers and a display screen. The presentation means will be incorporated within the receiver or provided separately. Similar functionality may also be obtained by use of a computer with a monitor and speakers. All such arrangements, and any other hardware, be they distributed or packaged within a stand-alone box are within the scope of this application.

Figure 1 shows schematically the provision of programming by way of a set top box 22 to a television receiver 2. Programming content, that is video and audio data, is created as indicated at 4 and is provided to a network provider or broadcaster 6 for transmission. The video and audio content 4 is combined for transmission with information and control data 8. This information and control data 8 may include teletext information, and other material, including data, such as graphics, for display. The information and control data 8 also incorporates data to command and control operation of the set top box 22 and the TV receiver 2. For example, the control data 8 may require the set top box to interrogate a viewing card to check authorisations.

The information and control data may be supplied to the broadcaster 6 for combination with the programming content 4 or it may be fed separately to a multiplexer 20 which is arranged to packetise and multiplex the programming content and the information and control data into a transport stream in accordance with the appropriate standards. It is this material which is then transmitted by any appropriate means to a set top box 22. As is well known, the set top box includes a receiver 10 for receiving the transmitted programming, a memory 12 and a processing unit 14. The processing unit has a card reader 16 in which a viewing card 18 can be inserted. Operation of the set top box 22 is controlled by a remote control device 30 which is in communication with the processing unit 14 of the set top box 22 by way, for example, of infrared communication.

The set top box 22 may also be arranged to communicate with the broadcaster 6. For example, and as illustrated, there may be a telephonic connection 24 between the processing unit 14 and the broadcaster 6. This communication between the set top box 22 and the broadcaster 6 can be two-way to enable, for example, the set top box to obtain from the broadcaster information and control data 8 indicating whether or not the subscriber's account identified on the viewing card 18 is up to date.

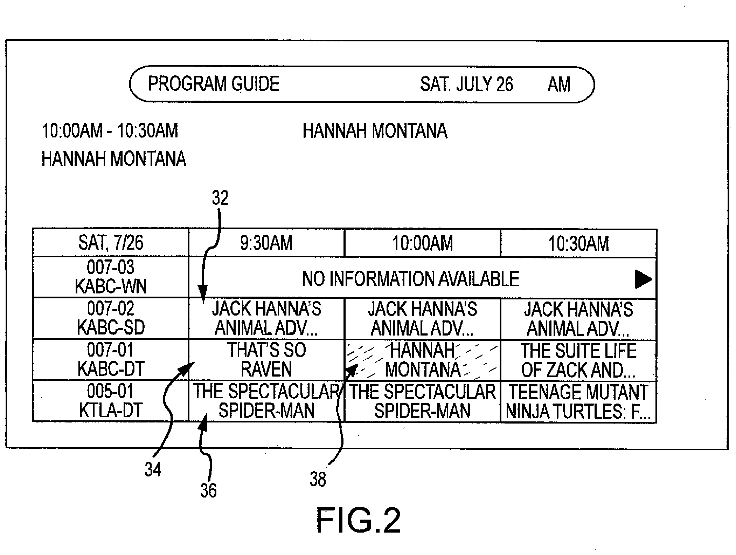

In order to access programming it is usual to display an electronic program guide on the screen of the receiver 2. Thus, a user would, by way of the remote control device 30, request of the set top box 22 details of programs available. The processor 14 either receives an electronic program guide from the broadcaster 6 or, more usually, receives the necessary information, creates the electronic program guide, and causes it to be displayed on the screen of the receiver 2. The electronic program guide identifies the channels available and current and future programs, as indicated in Figure 2. By use of the remote control device 30 the user is able to scroll between channels and programs. If the user highlights a currently available program, such as the program "Hannah Montana" 38 shown in Figure 2, and then selects that program using the remote control 30, the program will be tuned to by the receiver 10 of the set top box 22 and displayed on the screen of the receiver 2.

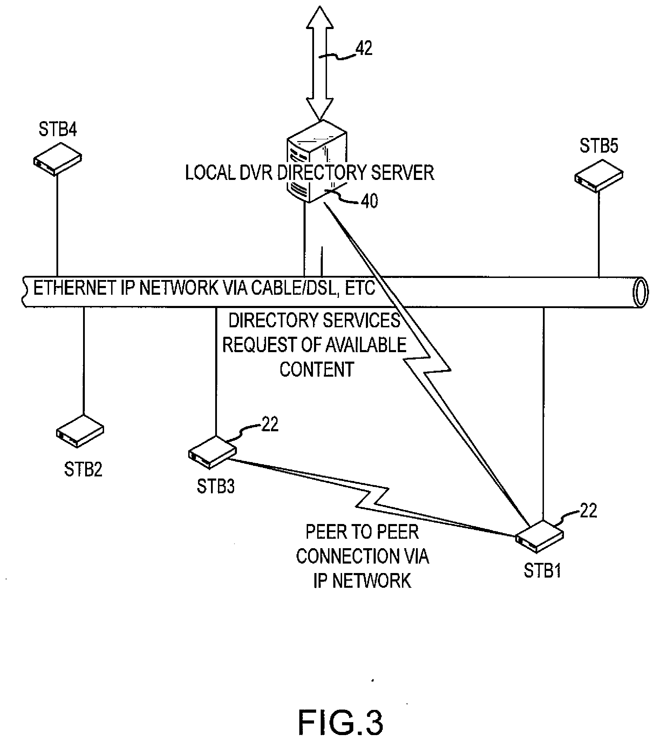

It frequently happens that a user misses a program they wanted to view. For example, the user may have forgotten to record a favourite program, or switches on the receiver during the course of the program or after it has finished. Figure 3 shows an example of a network which can enable a user to have access to broadcast programs which occurred in the past, usually in the recent past, say within the last 24 hours.

As is shown in Figure 3, a number of set top boxes 22 of different receivers are networked to each other and to a server 40. It will be seen that the set top boxes 22 in different locations are identified as STB1, STB2 ..... The network can be configured in any appropriate manner but it is preferred that communication between the set top boxes 22 and to the server 40 is by way of internet protocol (IP). Each set top box 22 is arranged to communicate with the server 40. At specified time periods each set top box 22 is arranged to provide to the server a list of the content that it has recorded locally in its memory or hard disk 12. This communication of content to the server 40 can be initiated by the set top boxes 22 at different times or can be in response to interrogations from the server 40. The server 40 will compile a list of the stored content and also stores information as to where that content is stored. The list of available stored content will cover all content stored in the last 24 hours.

Figure 2 shows an electronic program guide of the invention at 10 a.m. and indicates in a first column programs available at 10 a.m., and in a second column later programs at 10.30 a.m. In this sense the electronic program guide will be as usual and as expected. However, there is a further column to the left of 10 a.m. which shows programs that have finished but which may be still available. Thus, the further column to the left is indicating programs in the past. In addition, the individual programs in the past may be colour coded to indicate availability. The first item in the further column, item 32, is in red to indicate that it has not been recorded and hence is not available. List item 34 is in dark green to show that the content is available for download or for real time buffering via a peer-to-peer connection. The third item 36 is coloured light green to show that this content has been downloaded to the local hard drive 12 and is available for viewing now. Other content which has been recorded locally might be shown in light green to indicate availability.

The content which is currently highlighted for selection is item 38 "Hannah Montana". The other items in the 10 a.m. and 10.30 a.m. columns have a white background, to indicate that they are events which are either available presently or will be available in the usual way in the future.

An electronic program guide is usually navigated by the use of cursors on the remote control unit 30, and the guide shown in Figure 2 can be similarly navigated. However, and as will be appreciated, the electronic program guide of Figure 2 can be navigated backwardly in time.

We have seen that the server 40 compiles a list of content which was broadcast earlier and which is available because it has been recorded on one or more set top boxes. The server 40 makes this list available to each set top box 22 and enables each set top box to generate and display an electronic program guide, as shown in Figure 2, which additionally includes earlier programs together with an indication as to whether any particular past program has been stored on the network. The user uses the remote control device 30 to navigate the electronic program guide of Figure 2 backwardly in time and to identify a program which has been recorded and is available. For example, the user might identify the program "That's So Raven" at 34. As far as the user is concerned, this content is accessed by selecting it in the normal way. The user is then given the option to download the content or to stream it in real time. Having chosen the form of receipt, the set top box of the user, for example STB1 of Figure 3 is put into peer-to-peer connection via an IP network with STB3 which has the content stored. As the connection is established by the server 40 neither of the set top boxes needs to know the address of the other.

If the user has chosen that the content be downloaded, this will then occur and the program will appear shortly thereafter in the user's electronic program guide as an item as 36 indicating that it is locally stored. The program can then be accessed in the usual way. If the user has chosen to watch it in real time, the stored content on set top box STB3 is streamed to the user's set top box STB1 and is buffered and presented in the usual manner.

It will be seen in Figure 3 that the server 40 is provided with a connection 42. This connection will be to the broadcaster 6 or to a holder of subscription information. The server 40 will not put two set top boxes in communication, for example, if the content to be downloaded or streamed is not available to the user requesting it. This may occur, for example, if the content was on a subscription channel to which the requesting user is not subscribed, or if the content was pay per view and has not been paid for.

It will be appreciated that the invention provides users with access to stored programs without it being necessary to establish a central database of programs. The functionality for obtaining the programs is substantially the same as the familiar electronic program guide so that it is very easy for a user to access programs.

Network DVR has been proposed but in such arrangements a large number of hard disks are required for storage. In this case, use is made of the storage capacities of the networked set top boxes, each of which already has a hard disk which may not be fully utilised.

An advantage of the invention is that the user of a set top box is enabled to read backwards through the electronic program guide and to access events that they have missed or that they forgotten to record.

It may be that the program which has been stored on a set top box has been decrypted for receipt and storage by the set top box, for example, because it was available from a subscription channel. The processor 14 of that set top box will be arranged to reencrypt the content before providing it to a requesting set top box. If the requesting set top box is subscribed to the same channel, for example, it will be able to use its own key to gain access to the encrypted material.

It will be appreciated that modifications and amendments may be made to the embodiments as described and illustrated within the scope of the accompanying claims.

## Claims

1. A method of utilising an electronic program guide to make available at a local receiver (22) programming which was previously broadcast, the method comprising:
receiving at a server (40) details of earlier programs, which have already been broadcast by a content provider, and which have been stored by receiving devices (STB1-STB5) party to a network, and forming a list of earlier, stored programs together with details of the receiving devices where they are stored,
causing details of the identified earlier, stored programs to be incorporated into an electronic program guide of the local receiver (22) which is party to the network such that the earlier, stored programs are available for presentation, wherein the electronic program guide also identifies the broadcast channels available and current and future programs available for selection, and
in response to the selection, by way of a user interface (30) of the local receiver (22), of an earlier, stored program, the server (40) coupling the local receiver (22) to one or more receiving devices (STB1-STB5) where the required program is stored and causing that selected earlier, stored program to be accessed via a peer-to-peer connection for presentation by the local receiver (22), **characterised by**:
prior to coupling the local receiver (22) and the one or more receiving devices (STB1-STB5), the server (40) obtaining details of subscription terms appertaining to local receiver (22) and the server making a selected earlier, stored program that was broadcast on a subscription channel available to the local receiver (22) only where the subscription terms appertaining to the local receiver indicate that the local receiver was subscribed to the subscription channel and so allow such availability,
wherein the earlier program was broadcast on the subscription channel in encrypted form and the one or more receiving devices (STB1-STB5) decrypts the broadcast program before storing it, the method further comprising the one or more receiving devices reencrypting the earlier, stored program prior to making it available to the local receiver (22) using a key and wherein the local receiver (22) is able to decrypt the program for presentation using its own key if it is subscribed to the same subscription channel.

2. A method as claimed in Claim 1, further comprising causing the selected, earlier, stored program to be downloaded to said local receiver (22) for local storage and subsequent presentation.

3. A method as claimed in Claim 2, further comprising enabling streaming delivery of the selected, earlier, stored program to said local receiver (22) for contemporaneous presentation by said local receiver (22).

4. A method as claimed in Claim 1, further comprising causing the server (40) of the network to periodically interrogate the receiving devices (STB1-STB5) of the network to identify which earlier programs have been stored in preparation for the formation of the list.

5. A network for making available programming which was previously broadcast, the network comprising:
a plurality of receiving devices (STB1-STB5) coupled to form a network,
each receiving device being a receiver (22) of broadcast programming comprising means (10,2) arranged to receive broadcast programming from a content provider (6) and present the broadcast programming, processor means (14) arranged to present an electronic program guide to identify the time of presentation and the channel or source of various programs, at least one user interface (30), and means (12) for storing one or more programs received by said receiving and presenting means,
wherein the receiver (22) is additionally arranged to communicate with a server (40) via a network and to receive information about earlier programs which have been stored by the network, and in that the processor means (14) is arranged to present an electronic program guide identifying the broadcast channels available and current and future programs available, as well as incorporating details of various programs which were broadcast at a time earlier than the present time and to identify any such earlier programs that had been stored locally by the receiver (22), or by the network, and are available,
at least one server (40) coupled to the network such that it is arranged to communicate with the plurality of the receiving devices (STB1-STB5) in the network,
the server (40) being arranged to identify earlier programs, which have already been broadcast, and which have also been stored by at least one receiving device (STB1-STB5) of the network, and to cause details of the identified earlier, stored programs to be incorporated into the electronic program guide of each receiving device (22),
wherein in response to a selection, by way of the user interface (30) of the local receiver (22), of an earlier, stored program, the server (40) is arranged to couple the local receiver (22) to one or more receiving devices (STB1-STB5) where the required program is stored and cause that selected earlier, stored program to be accessed via a peer-to-peer connection for presentation by the local receiver (22), **characterised in that**:
the server (40) is arranged to, prior to coupling the local receiver and the one or more receiving devices, obtain details of subscription terms and conditions appertaining to local receiver (22), and the server making a selected, stored, program that was broadcast on a subscription channel available to the local receiver by only where the subscription terms appertaining to the local receiver indicate that the local receiver was subscribed to the subscription channel and so allow such availability,
wherein the program broadcast on a subscription channel is in encrypted form, and the one or more receiving devices (STB1-STB5) is arranged to decrypt the broadcast program before storing it and to re-encrypt the earlier, stored program prior to making it available to the local receiver (22) using a key and wherein the local receiver (22) is able to decrypt the program for presentation using its own key if it is subscribed to the same subscription channel.

6. A network for making available programming which was previously broadcast as claimed in Claim 5, wherein the receiving devices coupled by the network communicate with the server (40) using internet protocol (IP).

7. A network for making available programming which was previously broadcast as claimed in Claim 5 or Claim 6, wherein the server (40) is coupled to a broadcast provider and is enabled to receive subscription terms and conditions appertaining to each receiving device from the broadcast provider.

8. A network according to any of claims 5 to 7, wherein the receiver of broadcast programming is arranged to communicate to the network details of broadcast programs stored by said storing means (12).

## Patentansprüche

1. Verfahren zum Verwenden eines elektronischen Programmführers, um ein zuvor gesendetes Programm an einem lokalen Empfänger (22) verfügbar zu machen, wobei das Verfahren Folgendes umfasst:
Empfangen von Details früherer Programme auf einem Server (40), die bereits von einem Inhaltsanbieter gesendet wurden und die von Empfangsgeräten (STB1-STB5) gespeichert wurden, die an einem Netzwerk beteiligt sind, und Zusammenstellen einer Liste früherer, gespeicherter Programme mit Angaben zu den Empfangsgeräten, in denen sie gespeichert sind,
Veranlassen, dass Details der identifizierten früheren gespeicherten Programme in einen elektronischen Programmführer des lokalen Empfängers (22) aufgenommen werden, der Teil des Netzwerks ist, so dass die früheren, gespeicherten Programme zur Präsentation verfügbar sind, wobei der elektronische Programmführer auch die verfügbaren Rundfunkkanäle und die zur Auswahl verfügbaren aktuellen und zukünftigen Programme identifiziert, und
in Reaktion auf die Auswahl eines früheren, gespeicherten Programms über eine Benutzerschnittstelle (30) des lokalen Empfängers (22), Koppeln des lokalen Empfängers (22) durch den Server (40) mit einem oder mehreren Empfangsgeräten (STB1-STB5), wo das gewünschte Programm gespeichert ist, und Veranlassen, dass auf das ausgewählte frühere, gespeicherte Programm über eine Peer-to-Peer-Verbindung zugegriffen wird, um vom lokalen Empfänger (22) präsentiert zu werden, **gekennzeichnet durch**:
vor dem Koppeln des lokalen Empfängers (22) und der einen oder mehreren Empfangsvorrichtungen (STB1-STB5), Erhalten **durch** den Server (40) Details zu den Abonnementbedingungen, die sich auf den lokalen Empfänger (22) beziehen, und Bereitstellen eines auf einem Abonnementkanal gesendeten ausgewählten früheren gespeicherten Programms **durch** den Server für den lokalen Empfänger (22), nur wenn die für den lokalen Empfänger geltenden Abonnementbedingungen darauf hinweisen, dass der lokale Empfänger den Abonnementkanal abonniert hat, und so eine solche Verfügbarkeit zulassen,
wobei das frühere Programm in verschlüsselter Form auf dem Abonnementkanal gesendet wurde und das eine oder die mehreren Empfangsgeräte (STB1-STB5) das Rundfunkprogramm vor dem Speichern entschlüsseln, wobei das Verfahren ferner umfasst, dass das eine oder die mehreren Empfangsvorrichtungen das frühere, gespeicherte Programm wieder verschlüsseln, bevor es dem lokalen Empfänger (22) unter Verwendung eines Schlüssels zur Verfügung gestellt wird, und wobei der lokale Empfänger (22) das Programm zur Präsentation unter Verwendung seines eigenen Schlüssels entschlüsseln kann, wenn er denselben Abonnementkanal abonniert hat.

2. Verfahren nach Anspruch 1, ferner umfassend Veranlassen, dass das ausgewählte, frühere, gespeicherte Programm zur lokalen Speicherung und anschließenden Präsentation auf den lokalen Empfänger (22) heruntergeladen wird.

3. Verfahren nach Anspruch 2, ferner umfassend Ermöglichen der Streaming-Übermittlung des ausgewählten, früheren, gespeicherten Programms an den lokalen Empfänger (22) zur gleichzeitigen Präsentation durch den lokalen Empfänger (22).

4. Verfahren nach Anspruch 1, ferner umfassend das Veranlassen, dass der Server (40) des Netzwerks die Empfangsgeräte (STB1-STB5) des Netzwerks periodisch abfragt, um zu identifizieren, welche früheren Programme in Vorbereitung auf die Erstellung der Liste gespeichert wurden.

5. Ein Netzwerk zum Bereitstellen von Programmen, die zuvor gesendet wurden, wobei das Netzwerk Folgendes umfasst:
mehrere Empfangsgeräte (STB1-STB5), die gekoppelt sind, um ein Netzwerk zu bilden,
wobei jedes Empfangsgerät ein Empfänger (22) von Rundfunkprogrammen ist, umfassend Mittel (10,2), die angeordnet sind, um ein Rundfunkprogramm von einem Inhaltsanbieter (6) zu empfangen und das Rundfunkprogramm zu präsentieren, Prozessormittel (14), die angeordnet sind, um einen elektronischen Programmführer zu präsentieren, um den Zeitpunkt der Präsentation und den Kanal oder die Quelle verschiedener Programme zu identifizieren, mindestens eine Benutzeroberfläche (30) und Mittel (12) zum Speichern eines oder mehrerer Programme, die von den Empfangs- und Präsentationsmitteln empfangen wurden,
wobei der Empfänger (22) zusätzlich angeordnet ist, mit einem Server (40) über ein Netzwerk zu kommunizieren und Informationen über frühere Programme zu empfangen, die vom Netzwerk gespeichert wurden, und indem die Prozessormittel (14) so angeordnet sind, dass sie einen elektronischen Programmführer präsentieren, der die verfügbaren Sendekanäle und aktuellen und zukünftigen verfügbaren Programme identifiziert, sowie Details verschiedener Programme enthält, die zu einem Zeitpunkt früher als zum gegenwärtigen Zeitpunkt gesendet wurden, und um solche früheren Programme zu identifizieren, die lokal vom Empfänger (22) oder vom Netzwerk gespeichert wurden und verfügbar sind,
mindestens einen Server (40), der so mit dem Netzwerk verbunden ist, dass er so angeordnet ist, dass er mit den mehreren Empfangsgeräten (STB1-STB5) im Netzwerk kommuniziert;
wobei der Server (40) angeordnet ist, um frühere Programme zu identifizieren, die bereits gesendet wurden und die auch von mindestens einem Empfangsgerät (STB1-STB5) des Netzwerks gespeichert wurden, und um zu veranlassen, dass Details der identifizierten früheren, gespeicherten Programme in die elektronische Programmführung jedes Empfangsgeräts (22) aufgenommen werden,
wobei der Server (40) so angeordnet ist, dass er, als Reaktion auf eine Auswahl eines früheren gespeicherten Programms über die Benutzerschnittstelle (30) des lokalen Empfängers (22), den lokalen Empfänger (22) mit einem oder mehreren Empfangsgeräten (STB1-STB5) koppelt, auf denen das erforderliche Programm gespeichert ist, und veranlasst, dass auf das ausgewählte frühere, gespeicherte Programm über eine Peer-to-Peer-Verbindung zugegriffen wird, um vom lokalen Empfänger (22) präsentiert zu werden, **dadurch gekennzeichnet:**
**dass** der Server (40) so angeordnet ist, dass er vor dem Koppeln des lokalen Empfängers mit dem einen oder den mehreren Empfangsgeräten Details zu den Abonnementbedingungen für den lokalen Empfänger (22) erhält, und der Server ein auf einem Abonnementkanal gesendetes, ausgewähltes, gespeichertes Programm dem lokalen Empfänger nur dann zur Verfügung stellt, wenn die für den lokalen Empfänger geltenden Abonnementbedingungen darauf hinweisen, dass der lokale Empfänger den Abonnementkanal abonniert hat, und so eine solche Verfügbarkeit zulassen,
wobei das auf einem Abonnementkanal gesendete Programm in verschlüsselter Form vorliegt und das eine oder die mehreren Empfangsgeräte (STB1-STB5) angeordnet sind, das Rundfunkprogramm vor dem Speichern zu entschlüsseln und das frühere, gespeicherte Programm mit einem Schlüssel erneut zu verschlüsseln, bevor es dem lokalen Empfänger (22) verfügbar gemacht wird, und wobei der lokale Empfänger (22) das Programm zur Präsentation unter Verwendung seines eigenen Schlüssels entschlüsseln kann, wenn er denselben Abonnementkanal abonniert hat.

6. Netzwerk zum Bereitstellen von Programmen, die zuvor gesendet wurden, gemäß Anspruch 5, wobei die vom Netzwerk gekoppelten Empfangsgeräte mit dem Server (40) unter Verwendung des Internetprotokolls (IP) kommunizieren.

7. Netzwerk zum Bereitstellen von Programmen, die zuvor gesendet wurden, gemäß Anspruch 5 oder Anspruch 6, wobei der Server (40) mit einem Rundfunkanbieter gekoppelt ist und befähigt ist, Abonnementbedingungen für jedes Empfangsgerät vom Rundfunkanbieter zu empfangen.

8. Netzwerk nach einem der Ansprüche 5 bis 7, wobei der Empfänger von Rundfunkprogrammen so angeordnet ist, dass er Details von durch die Speichermittel (12) gespeicherten Rundfunkprogrammen mit den Netzwerk kommuniziert.

## Revendications

1. Procédé d'utilisation d'un guide de programme électronique pour rendre disponible, au niveau d'un récepteur local (22), une programmation qui a été précédemment diffusée, le procédé comprenant :
la réception, au niveau d'un serveur (40), de détails sur des programmes antérieurs, qui ont déjà été diffusés par un fournisseur de contenu, et qui ont été stockés par des dispositifs récepteurs (STB1-STB5) faisant partie d'un réseau, et la formation d'une liste de programmes stockés antérieurs accompagnés de détails sur les dispositifs récepteurs où ils sont stockés,
le fait d'amener des détails sur les programmes stockés antérieurs identifiés à être incorporés dans un guide de programme électronique du récepteur local (22) qui fait partie du réseau de sorte que les programmes stockés antérieurs sont disponibles pour une présentation, dans lequel le guide de programme électronique identifie également les canaux de diffusion disponibles et les programmes actuels et futurs disponibles pour une sélection, et
en réponse à la sélection, au moyen d'une interface utilisateur (30) du récepteur local (22), d'un programme stocké antérieur, le couplage, par le serveur (40), du récepteur local (22) à un ou plusieurs dispositifs récepteurs (STB1-STB5) où le programme requis est stocké et le fait d'amener ce programme stocké antérieur sélectionné à être accessible par l'intermédiaire d'une connexion poste à poste pour une présentation par le récepteur local (22), **caractérisé par** :
avant le couplage du récepteur local (22) et des un ou plusieurs dispositifs récepteurs (STB1-STB5), l'obtention, par le serveur (40), de détails sur des conditions d'abonnement relatives au récepteur local (22) et la réalisation, par le serveur, d'un programme stocké antérieur sélectionné qui a été diffusé sur un canal d'abonnement disponible pour le récepteur local (22) uniquement lorsque les conditions d'abonnement relatives au récepteur local indiquent que le récepteur local a été abonné au canal d'abonnement et permettent ainsi une telle disponibilité,
dans lequel le programme antérieur a été diffusé sur le canal d'abonnement sous forme cryptée et les un ou plusieurs dispositifs récepteurs (STB1-STB5) décryptent le programme diffusé avant de le stocker, le procédé comprenant en outre les un ou plusieurs dispositifs récepteurs recryptant le programme stocké antérieur avant de le rendre disponible pour le récepteur local (22) à l'aide d'une clé et dans lequel le récepteur local (22) est capable de décrypter le programme pour une présentation à l'aide de sa propre clé s'il est abonné au même canal d'abonnement.

2. Procédé selon la revendication 1, comprenant en outre le fait d'amener le programme stocké antérieur sélectionné à être téléchargé vers ledit récepteur local (22) pour un stockage local et une présentation ultérieure.

3. Procédé selon la revendication 2, comprenant en outre l'activation de la distribution en continu du programme stocké antérieur sélectionné vers ledit récepteur local (22) pour une présentation immédiate par ledit récepteur local (22).

4. Procédé selon la revendication 1, comprenant en outre le fait d'amener le serveur (40) du réseau à interroger périodiquement les dispositifs récepteurs (STB1-STB5) du réseau pour identifier les programmes antérieurs qui ont été stockés en préparation pour la formation de la liste.

5. Réseau pour rendre disponible une programmation qui a été précédemment diffusée, le réseau comprenant :
une pluralité de dispositifs récepteurs (STB1-STB5) couplés pour former un réseau,
chaque dispositif récepteur étant un récepteur (22) de programmation de diffusion comprenant des moyens (10, 2) conçus pour recevoir la programmation de diffusion depuis un fournisseur de contenu (6) et présenter la programmation de diffusion, un moyen de traitement (14) conçu pour présenter un guide de programme électronique afin d'identifier l'heure de présentation et le canal ou la source de divers programmes, au moins une interface utilisateur (30), et un moyen (12) pour stocker un ou plusieurs programmes reçus par lesdits moyens de réception et de présentation,
dans lequel le récepteur (22) est en outre conçu pour communiquer avec un serveur (40) par l'intermédiaire d'un réseau et pour recevoir des informations sur des programmes antérieurs qui ont été stockés par le réseau, et en ce que le moyen de traitement (14) est conçu pour présenter un guide de programme électronique identifiant les canaux de diffusion disponibles et les programmes actuels et futurs disponibles, et incorporant également des détails sur divers programmes qui ont été diffusés à une heure antérieure à l'heure actuelle et pour identifier l'un quelconque de ces programmes antérieurs qui avaient été stockés localement par le récepteur (22), ou par le réseau, et qui sont disponibles,
au moins un serveur (40) couplé au réseau de sorte qu'il est conçu pour communiquer avec la pluralité des dispositifs récepteurs (STB1-STB5) dans le réseau,
le serveur (40) étant conçu pour identifier des programmes antérieurs, qui ont déjà été diffusés, et qui ont également été stockés par au moins un dispositif récepteur (STB1-STB5) du réseau, et pour amener des détails des programmes stockés antérieurs identifiés à être incorporés dans le guide de programme électronique de chaque dispositif récepteur (22),
dans lequel en réponse à une sélection, au moyen de l'interface utilisateur (30) du récepteur local (22), d'un programme stocké antérieur, le serveur (40) est conçu pour coupler le récepteur local (22) à un ou plusieurs dispositifs récepteurs (STB1-STB5) où le programme requis est stocké et pour amener ce programme stocké antérieur sélectionné à être accessible par l'intermédiaire d'une connexion poste à poste pour une présentation par le récepteur local (22), **caractérisé en ce que** :
le serveur (40) est conçu pour, avant le couplage du récepteur local et des un ou plusieurs dispositifs récepteurs, obtenir des détails sur des conditions d'abonnement relatives au récepteur local (22), et réaliser, par le serveur, un programme stocké sélectionné qui a été diffusé sur un canal d'abonnement disponible pour le récepteur local uniquement lorsque les conditions d'abonnement relatives au récepteur local indiquent que le récepteur local a été abonné au canal d'abonnement et permettent ainsi une telle disponibilité,
dans lequel le programme diffusé sur un canal d'abonnement est sous forme cryptée, et les un ou plusieurs dispositifs récepteurs (STB1-STB5) sont conçus pour décrypter le programme de diffusion avant de le stocker et pour recrypter le programme stocké antérieur avant de le rendre disponible pour le récepteur local (22) à l'aide d'une clé et dans lequel le récepteur local (22) est capable de décrypter le programme pour une présentation à l'aide de sa propre clé s'il est abonné au même canal d'abonnement.

6. Réseau pour rendre disponible une programmation qui a été précédemment diffusée selon la revendication 5, dans lequel les dispositifs récepteurs couplés par le réseau communiquent avec le serveur (40) à l'aide du protocole internet (lP).

7. Réseau pour rendre disponible une programmation qui a été précédemment diffusée selon la revendication 5 ou la revendication 6, dans lequel le serveur (40) est couplé à un fournisseur de diffusion et est autorisé à recevoir des conditions d'abonnement relatives à chaque dispositif récepteur depuis le fournisseur de diffusion.

8. Réseau selon l'une quelconque des revendications 5 à 7, dans lequel le récepteur de programmation de diffusion est conçu pour communiquer au réseau des détails de programmes de diffusion stockés par ledit moyen de stockage (12).
